# EUROPEAN PATENT SPECIFICATION

(11) **EP 3 088 287 B1**
(45) Date of publication and mention of the grant of the patent: **13.12.2017**
(21) Application number: 16164528.8
(22) Date of filing: 08.04.2016
(51) Int. Cl.: B62K 19/46, B62K 11/04, B62M 7/04, B62J 17/00, B62J 17/02, B62J 25/00

(54) **STRADDLED VEHICLE**
GRÄTSCHSITZFAHRZEUG
VÉHICULE À CALIFOURCHON

(30) Priority: 28.04.2015 JP 2015091838
(43) Date of publication of application: 02.11.2016
(73) Proprietor: Yamaha Hatsudoki Kabushiki Kaisha, Iwata-shi, Shizuoka 438-8501 (JP)
(72) Inventor: OHARA, Tohru, 10540 Samutprakarn (TH)
(74) Representative: Moreland, David

(56) References cited:
- EP-A1- 1 553 011
- EP-A1- 2 871 120
- JP-A- H0 550 963
- JP-A- H01 275 281
- JP-A- H03 217 384
- JP-A- 2013 056 595

## Description

### FIELD OF INVENTION

The present invention relates to a straddled vehicle.

### BACKGROUND TO INVENTION

Straddled vehicles equipped with a storage compartment that can accommodate a helmet or the like are known. WO 2004/031026 (HONDA) discloses a scooter equipped with a storage compartment disposed behind a head pipe and in front of a seat. The storage compartment disclosed in WO 2004/031026 includes a storage box having an opening in an upper and rear portion so that stored items can be accessed from above. This opening is configured so as to be opened and closed by a seat on which the rider is to be seated and which also functions as a lid. Respective openings are formed in a left portion and a right portion of a lower part of the storage box so that items can be put in and taken out either from the left side or from the right side. A left cover is provided to the left of the left opening, and a right cover is provided to the right of the right opening. Each of the left cover and the right cover serves as a lid of the respective opening, and is configured to be capable of opening and closing.

The scooter has a body frame, a footboard on which the feet of the rider are to be placed, and a power unit swingably supported by the body frame. The body frame has a down member portion extending downward from a head pipe, a horizontal member portion extending rearward from the bottom end of the down member portion, a rear member portion extending rearward and obliquely upward from the rear end of the horizontal member portion, and a seat rail portion extending rearward from the top end of the rear member portion. The horizontal member portion is disposed at a relatively low position, and the footboard is supported on the horizontal member portion. The power unit is swingably coupled to the rear member portion by a pivot shaft.

In the above-described scooter, the body frame is formed in a U-shape as viewed from a side view of the vehicle. The horizontal member portion is disposed downward relative to the footboard. The power unit is swingably coupled to the rear member portion, and most of the power unit is disposed rearward relative to the rear member portion. As a result, the scooter is allowed to have a vertically large space behind the head pipe and in front of the seat, and a large-sized storage compartment is disposed in that space. The above-described scooter can provide a large storage space inside the storage compartment.

The following type of straddled vehicle is also known which is a straddled vehicle that is of a type different from the above-described scooter. The known straddled vehicle includes: a body frame including a main frame extending rearward and obliquely downward from a head pipe, and a rear frame extending rearward and obliquely upward from the main frame; and a power unit supported non-swingably by the body frame and at least a portion of which is disposed downward relative to the main frame. In this type of straddled vehicle, at least a portion of the power unit is disposed downward relative to the main frame, within a space behind the head pipe, and in front of the seat. Consequently, it is difficult to place a conventional storage compartment with a large vertical dimension in the space behind the head pipe and in front of the seat. When the storage compartment needs to be disposed behind the head pipe and in front of the seat in the aforementioned straddled vehicle, it is difficult to ensure sufficient storage space unless some design solution can be implemented.

Here, in order to ensure a large storage space above the main frame in the above-described scooter, it may appear possible to enlarge the lateral dimension of the storage compartment. Note that the term "lateral" herein is used interchangeably to refer to a vehicle width direction, i.e. a left-to-right/right-to-left direction. When the lateral dimension of the storage compartment is enlarged, the left side wall of the storage compartment is positioned more leftward and the right side wall is positioned more rightward. This means that the portion of the storage compartment that is frontward relative to the seat has a larger lateral dimension.

With a straddled vehicle, the rider holds the portion in front of the seat firmly between left and right legs in many cases. This is called "a knee grip action". The knee grip action is one of the fundamental riding postures when the rider rides on a straddled vehicle, and such affects ride quality. When a storage compartment with a large lateral dimension is disposed behind the head pipe and in front of the seat, it becomes difficult for the rider to hold the portion frontward relative to the seat firmly between left and right legs and to perform a proper knee grip action. This results in a poor ride quality.

In addition, if the lateral dimension of the storage compartment is set large but the opening in the upper portion of the storage compartment is small, there may be some space that cannot easily be seen or accessed in the storage compartment. In order to increase usability, it is necessary to provide a sufficiently large opening in an upper portion of the storage compartment. In that case, the lid (i.e. the seat or cover) that covers the opening needs to have a correspondingly larger lateral size. However, the lid with a larger lateral dimension may cause the lid to interfere with other of the vehicle's constituent components when opening the lid, or may increase the size of the open and close mechanism for the lid.

In view of these problems, it may appear possible to provide an opening in a side wall of the storage compartment disposed above the power unit and to cover the opening with a side cover capable of being opened and closed. Generally, in a straddled vehicle, it is not often the case that any constituent component of the vehicle is disposed laterally further outward of the storage compartment. Therefore, with the aforementioned configuration, the side cover is unlikely to interfere with other constituent components of the vehicle even when the side cover is opened or closed to the left or right.

Nevertheless, when the side cover is configured to be capable of being opened and closed, the thickness of the side cover tends to be made larger in order to ensure required rigidity. Consequently, because of the increase in the lateral dimension of the side cover in addition to the increase in the lateral dimension of the storage space, the overall lateral dimension of the storage compartment becomes even larger. This leads to a problem that it becomes more difficult for the rider to perform a proper knee grip action and the ride quality becomes poorer.

The present invention has been accomplished in view of the foregoing and other problems, and it is an object of the invention to obtain both sufficient storage space and a good ride quality with a straddled vehicle that has a power unit non-swingably supported by a main frame and a storage compartment at least a portion of which is disposed behind a head pipe, in front of a seat, and above the power unit.

JP 2013 056595 A (Honda Motor Co. Ltd.) describes a power unit disposed at the lower side of a seat; a step disposed at the lower side of the seat while being mounted to a downwardly-extending frame; and a main storage unit disposed in front of the vehicle rather than the downwardly-extending frame and at the lower side of a main frame. The main storage unit is disposed in front of the vehicle of the step, and therefore, a driver's leg is free from interference with the main storage unit. The main storage unit is disposed at the lower side of the main frame, and therefore, it is free from the limit of a size in a vehicle width direction by the main frame. An increase in the size of the main storage unit can be achieved without an anxiety limited by the driver's leg and without being limited by a vehicle body frame. Document JP2013056595 discloses a straddled vehicle according to the preamble of claim 1. It is an objection of at least one embodiment of at least one aspect of the present invention to obviate or at least mitigate one or more problems or disadvantages in the prior art.

### SUMMARY OF INVENTION

A straddle vehicle according to the present invention is defined in independent claim 1 appended hereto. Some optional and/or preferred features are defined in the dependent claims appended hereto.

The above-described straddled vehicle ensures a large storage space by enlarging the storage compartment laterally outward in the vehicle configuration in which at least a portion of the power unit may be disposed below the storage compartment. In addition, the opening of the storage box may be opened and closed by the or each side cover. No constituent component of the vehicle, or only a small number of constituent components thereof, may exist laterally outward of the or each side cover, so it is unlikely that the side cover interferes with other of the vehicle's constituent components when the or each side cover is opened. Therefore, even if the lateral dimension of the storage box is increased, the open and close operations of the or each side cover may be performed smoothly, and it may be possible to enlarge the storage space of the storage box. Moreover, it may be possible to enlarge the opening of the storage box, so it may be easy to visually confirm the storage space. Thus, usability of the storage compartment may be enhanced. Because the protruding portion is provided in at least a portion of the outer peripheral portion of the or each side cover, the or each side cover may be allowed to have sufficient rigidity without increasing the thickness of the entire side cover uniformly even when the or each side cover may be configured to be capable of being opened and closed. In the just-described straddled vehicle, sufficient rigidity is ensured. Therefore, the thickness of the or each entire side cover may not be increased uniformly, but the recessed portion is provided in a central portion of the or each side cover. This may allow a rider to perform a knee grip action easily. Thus, the above-described straddled vehicle can provide sufficient storage space and/or a good ride quality.

In one preferred implementation of the present invention, the main frame may be formed in a V-shape as viewed from a side view of the vehicle. At least a portion of the recessed portion of the or each side cover may be positioned on the same vertical line as is a bottom end portion of the main frame, as viewed from a side view of the vehicle.

When the main frame may be formed in a V-shape as viewed from a side view of the vehicle, the portion within the space above the main frame may be located on the same vertical line as is the bottom end portion of the main frame may be where a sufficient vertical dimension can be most easily obtained. In the just-described preferred implementation, a portion of the storage compartment may be positioned on the same vertical line as is the bottom end portion of the main frame. As a result, the storage compartment may be allowed to have a sufficient vertical dimension (relatively) easily. The aforementioned preferred implementation may make it possible to ensure sufficient storage space. In the just-described preferred implementation, a portion of the recessed portion of the side cover may be positioned on the same vertical line as is the bottom end portion of the main frame, as viewed from a side view of the vehicle. Because the recessed portion may be provided in a region where a sufficient vertical dimension is (relatively) easily obtained, the recessed portion may be allowed to have a large area as viewed from a side view of the vehicle. As a result, a rider may be allowed to perform a knee grip action more easily, and the ride quality may be improved.

In another preferred implementation of the present invention, as viewed from a side view of the vehicle, a top end of the recessed portion of the or each side cover may be positioned upward relative to a top end of the main frame and a top end of the rear frame, and a bottom end of the recessed portion of the or each side cover may be positioned downward relative to the top end of the main frame and the top end of the rear frame.

The just-described preferred implementation may make it possible to dispose the recessed portion at a position where it may be (relatively) easy for the rider to perform a knee grip action. Therefore, the ride quality is may be further improved.

In another preferred implementation of the present invention, the side cover may include a hole provided therein. In addition, the recessed portion may be constituted by at least a portion of a lid detachably attached to the or each side cover and configured to close the hole.

With the just-described preferred implementation, the hole, in place of the recessed portion, may be provided in the storage compartment by detaching the lid from the side cover. This may make it possible to put an item in the storage compartment so that part of the item may stick out through the hole; so it may become possible to utilize the region laterally outward of the hole as a part of the storage space. Moreover, it may become possible for a rider to insert part of a leg into the hole, and the knee grip action may become further (relatively) easier. Thus, the just-described preferred implementation may make it possible to provide sufficient storage space and/or a good ride quality.

In another preferred implementation of the present invention, the recessed portion may be formed in a rewardly tapered shape, as viewed from a side view of the vehicle.

This preferred implementation may allow the rider to perform the knee grip action easily.

In another preferred implementation of the present invention, a lateral dimension of the storage compartment may be greater than a lateral dimension of the body frame.

The just-described preferred implementation may make it possible to provide a large storage space, e.g. because the storage compartment has a large lateral dimension.

In another preferred implementation of the present invention, a longitudinal dimension of the storage compartment may be greater than a lateral dimension of the storage compartment and greater than a vertical dimension of the storage compartment.

In the just-described preferred implementation, the vertical dimension of the storage compartment may be smaller than the longitudinal dimension of the storage compartment. Therefore, it may be possible that at least a portion of the storage compartment may be disposed behind the head pipe, in front of the seat, and above the power unit, while ensuring a sufficient volume of storage space. Moreover, because the lateral dimension of the storage compartment may be smaller than the longitudinal dimension of the storage compartment, a rider may be allowed to perform a knee grip action (relatively) easily while a sufficient volume of storage space may be ensured.

In another preferred implementation of the present invention, the protruding portion may be provided in the entire outer peripheral portion of the side cover and may be formed in a frame shape surrounding an entire perimeter of the recessed portion.

The just-described preferred implementation may make it possible to increase the rigidity of the side cover.

In another preferred implementation of the present invention, the protruding portion may include a strip-shaped front protruding portion and a strip-shaped rear protruding portion. As viewed from a side view of the vehicle, the front protruding portion may be positioned frontward relative to a longitudinal center position of the side cover. As viewed from a side of the vehicle the rear protruding portion may be positioned rearward relative to the longitudinal center position. A width of the front protruding portion may be greater than a width of the rear protruding portion.

In the just-described preferred implementation, the width of the rear protruding portion may be relatively small, which may allow a rider to perform a knee grip action easily. The width of the front protruding portion may be relatively large, which may provide sufficient rigidity for the side cover. As a result, the just-described preferred implementation may allow a rider to perform a knee grip action (relatively) easily while ensuring sufficient rigidity for the side cover.

In another preferred implementation of the present invention, the protruding portion may include a strip-shaped rear protruding portion positioned rearward relative to the longitudinal center position of the side cover, and/or the rear protruding portion may be inclined laterally more inwardly toward the recessed portion with respect to a vertical plane.

With the just-described preferred implementation, it may be possible or (relatively) easy for a rider to place a leg along the rear protruding portion because the rear protruding portion may be inclined. Therefore, a rider may be allowed to perform a knee grip action (relatively) easily.

In another preferred implementation of the present invention, a protruding dimension of a front end portion of the protruding portion may be greater than a protruding dimension of a rear end portion of the protruding portion.

In the just-described preferred implementation, the protruding dimension of the rear end portion of the protruding portion may be relatively small. Therefore, a rider may be allowed to perform a knee grip action easily. The protruding dimension of the front end portion of the protruding portion may be relatively large, so it may be (relatively) easy to ensure sufficient rigidity for the or each side cover. As a result, the just-described preferred implementation may allow a rider to perform a knee grip action (relatively) easily while ensuring sufficient rigidity for the side cover.

In another preferred implementation of the present invention, the straddled vehicle may further include a footrest disposed, as viewed from a side view of the vehicle, rearward relative to a front end of the power unit, frontward relative to a rear end of the seat, and downward relative to the main frame and the rear frame.

With the just-described preferred implementation, a rider may easily bring a portion of a leg into close contact with the recessed portion of the side cover when the rider sits on the seat and places a foot on the footrest. Therefore, a rider may be allowed to perform a knee grip action (relatively) easily.

In another preferred implementation of the present invention, the straddled vehicle may further include a fuel tank at least a portion of which may be disposed so as to overlap the seat as viewed in a plan view of the vehicle.

With the just-described preferred implementation, it may be possible to ensure sufficient space in front of the seat because the fuel tank may not be entirely disposed in front of the seat. Thus, without being hindered by the fuel tank, the storage compartment may be allowed to have (relatively) large dimensions. The space below the seat may be utilized effectively as the space for placing the fuel tank.

In another preferred implementation of the present invention, at least a portion of the fuel tank may overlap the rear frame as viewed from a side view of the vehicle.

With the just-described preferred implementation, the position of the seat may be set lower than the case in which the entire fuel tank may be disposed upward relative to the rear frame. Therefore, a rider may be allowed to perform a knee grip action in a (relatively) comfortable riding position.

In another preferred implementation of the present invention, the straddled vehicle may further include a hinge mechanism which may include a pivot shaft pivotably supporting the side cover onto the storage box, and which may join the side cover and the storage box to each other. The pivot shaft may be disposed so as to extend rearward and obliquely downward.

With the just-described implementation, the side cover may pivot about the pivot shaft extending rearward and obliquely downward. The side cover may pivot in a vehicle width direction and thereby open and close the opening of the storage box.

In another preferred implementation of the present invention, the straddled vehicle may further include:
a rear wheel, which may be disposed behind the power unit and below the seat, and which may be driven by a driving force that may be output by the power unit; and
a rear arm, which may be provided separately from the power unit, and which may include a front end portion supported swingably by the body frame and a rear end portion supporting the rear wheel.

This makes it possible to provide a preferable implementation or embodiment of the above-described straddled vehicle.

The present invention may make it possible to obtain one and preferably both sufficient storage space and a good ride quality with a straddled vehicle that has a power unit non-swingably supported by a main frame and a storage compartment at least a portion of which is disposed behind a head pipe, in front of a seat, and above the power unit.

It will be appreciated that features analogous to those described in relation to any of the above aspects or optional features may be individually and separably or in combination applicable to any of the other aspects or optional features.

### BRIEF DESCRIPTION OF DRAWINGS

An embodiment of the present invention will now be described, by way of example only, with reference to the accompanying drawings, which are:
- **Figure 1**: a side view illustrating a motorcycle according to an embodiment of the present invention;
- **Figure 2**: a front view of the motorcycle of Figure 1;
- **Figure 3**: a plan view of the motorcycle of Figure 1;
- **Figure 4**: a side view of a storage compartment, shown in partly in section, and a body frame of the motorcycle of Figure 1;
- **Figure 5**: a side view illustrating the storage compartment, the body frame, a power unit, and so forth of the motorcycle of Figure 1;
- **Figure 6**: a side view of a side cover of the motorcycle of Figure 1;
- **Figure 7**: a rear view of the storage compartment, when the side cover is closed, of the motorcycle of Figure 1;
- **Figure 8**: a rear view of the storage compartment, when a right side cover is opened of the motorcycle of Figure 1;
- **Figure 9**: a perspective view of the storage compartment, when the side cover is closed of the motorcycle of Figure 1; and
- **Figure 10**: a perspective view of the storage compartment, when the right side cover is opened of the motorcycle of Figure 1.

### DETAILED DESCRIPTION OF DRAWINGS

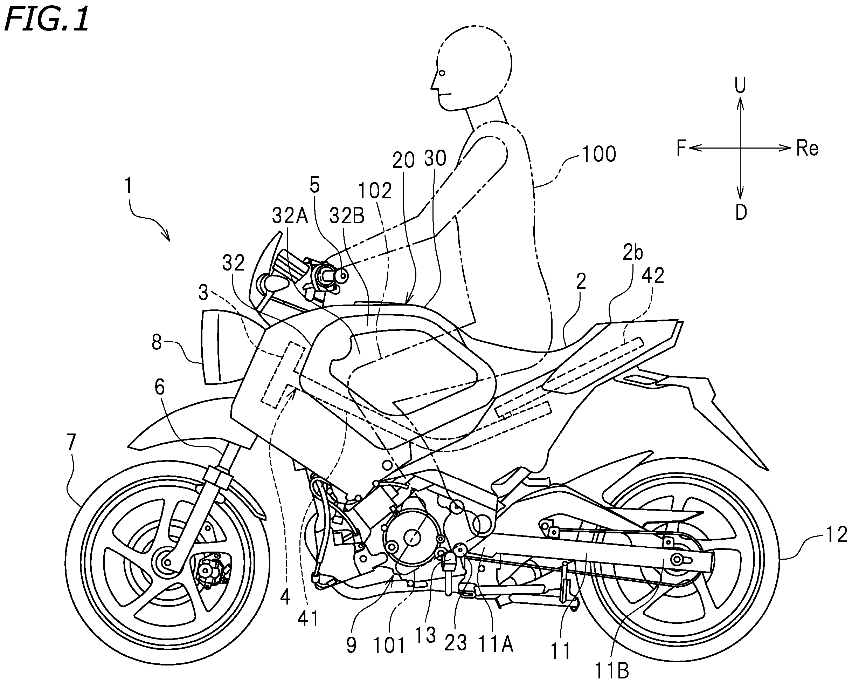

Hereinbelow, a preferred embodiment of the present invention will be described with reference to the accompanying drawings. As illustrated in Figure 1, the straddled vehicle according to the present embodiment is a motorcycle, generally designated 1. However, it will be appreciated that the straddled vehicle according to the present invention is not limited to a motorcycle, but may be any other type of vehicle, and particularly a straddled vehicle, such as an ATV (All Terrain Vehicle). It should be noted that herein the term "straddled vehicle" means a vehicle on which a rider straddles to ride.

In the following description, the terms "front," "rear," "left," "right," "up," and "down" respectively refer to front, rear, left, right, up, and down as defined based on the perspective of a rider 100 seated on a seat 2 of the motorcycle 1, unless specifically indicated otherwise. Reference characters F, Re, L, R, U, and D in the drawings indicate front, rear, left, right, up, and down, respectively. The terms "above/up" and "below/down" respectively mean the relative vertical positions above/up and below/down as used when the motorcycle 1 is at a standstill on a horizontal plane. Moreover, unless specifically indicated otherwise, the positional relationship of various parts in the following description shows the positional relationship thereof at the time when the motorcycle 1 is at a standstill on a horizontal plane.

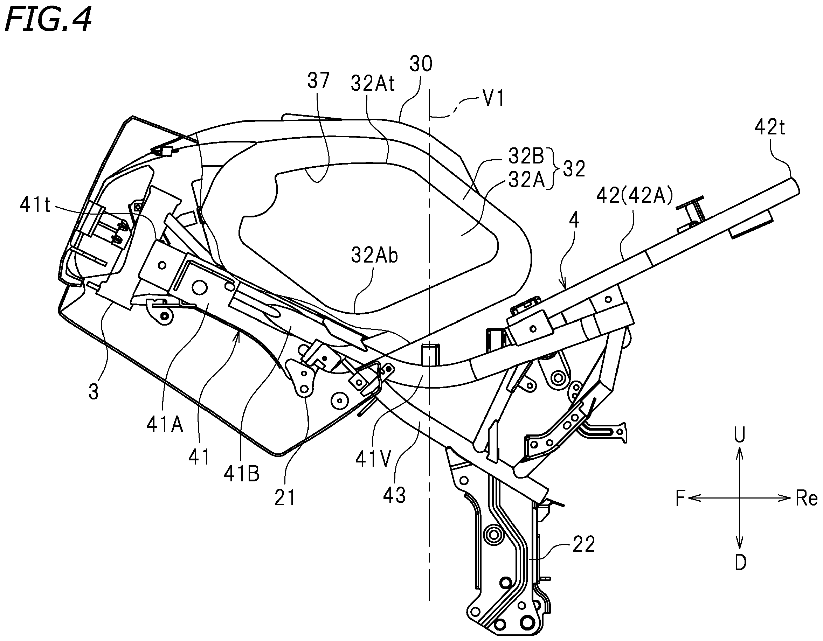

Figures 1, 2, and 3 are respectively a side view, a front view, and a plan view of the motorcycle 1. As illustrated in Figure 1, the motorcycle 1 includes a head pipe 3 and a body frame 4 extending rearward from the head pipe 3. As illustrated in Figure 4, the body frame 4 includes a main frame 41 extending rearward and obliquely downward from the head pipe 3, and a rear frame 42 extending rearward and obliquely upward from the main frame 41. The main frame 41 extends rearward and obliquely downward from the head pipe 3, and then extends rearward and obliquely upward, as viewed from a side view of the vehicle. The main frame 41 is formed in a V-shape as viewed from a side view of the vehicle. The main frame 41 has a lower end portion 41V recessed or concave downward as viewed from a side view of the vehicle.

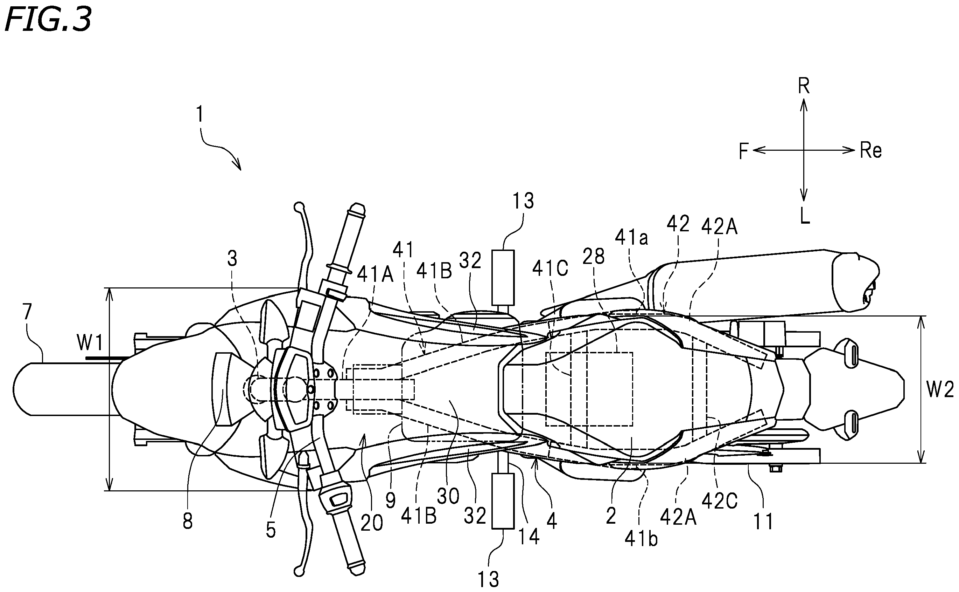

The main frame 41 has a first frame portion 41A connected to the head pipe 3 and a pair of left and right second frame portions 41B connected to the first frame portion 41A. As viewed from a side view of the vehicle, the first frame portion 41A extends rearward and obliquely downward, and the second first frame portions 41B are formed in a V-shape. As illustrated in Figure 3, as viewed in a plan view of the vehicle, the left second frame portion 41B extends rearward and obliquely leftward, and the right second frame portion 41B extends rearward and obliquely rightward. The rear frame 42 includes a pair of left and right rear frame portions 42A. The left rear frame portion 42A is connected to the left second frame portion 41B, and the right rear frame portion 42A is connected to the right second frame portion 41B. The left and right second frame portions 41B are connected to each other by a cross frame portion 41C extending in a vehicle width direction. The left and right rear frame portions 42A are connected to each other by a cross frame portion 42C extending in a vehicle width direction.

As illustrated in Figure 4, the body frame 4 further has supporting frames 43 each extending rearward and obliquely downward from an intermediate portion of the main frame 41. The supporting frames 43 include a pair of left and right supporting frames 43. The left supporting frame 43 is connected to the left second frame portion 41B, and the right supporting frame 43 is connected to the right second frame portion 41B. A first bracket 21 is fixed to a lower portion of the main frame 41. A second bracket 22 is fixed to the supporting frame 43.

It will be appreciated that the above-described configuration of the body frame 4 is merely an example. The configuration of the body frame 4 is not limited to the above-described configuration. The body frame 4 may comprise other configurations.

As illustrated in Figure 1, the motorcycle 1 is provided with a handlebar 5 to be used by the rider 100 for steering. A steering shaft, not shown, is inserted through the head pipe 3 so as to be rotatable rightward and leftward. The handlebar 5 is connected to an upper portion of the steering shaft. A front fork 6 is connected to a lower portion of the steering shaft. A front wheel 7 is supported at a bottom end portion of the front fork 6. A front cover 8 is disposed frontward, leftward, and rightward of the head pipe 3.

The motorcycle 1 has a seat 2 for the rider 100 to sit on. The seat 2 is disposed at the rear of the head pipe 3. The seat 2 is supported by the body frame 4. The seat 2 is supported by the rear frame 42.

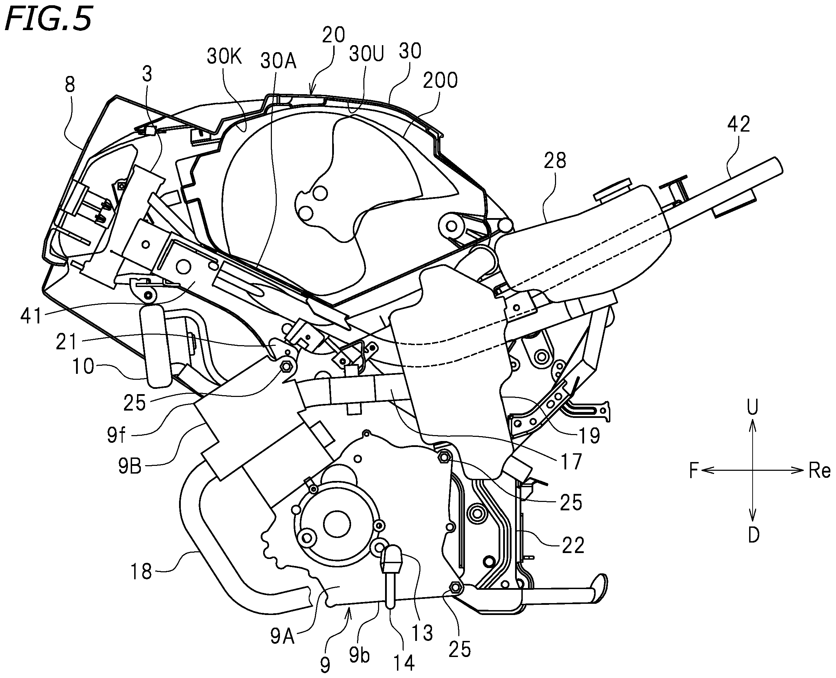

The motorcycle 1 has a power unit 9 for outputting driving force for driving. A rear wheel 12 is driven by the driving force that is output by the power unit 9. It will be appreciated that the configuration of the power unit 9 is not restricted in any way. In the present preferred embodiment, the power unit 9 includes an internal combustion engine and a transmission. In this embodiment, the internal combustion engine is a water-cooled internal combustion engine, and a radiator 10 is disposed in front of the power unit 9 (Figure 5). However, the internal combustion engine may be an air-cooled internal combustion engine, so the radiator 10 is not always necessary. As schematically illustrated in Figure 3, at least a portion of the power unit 9 is disposed laterally between the left side or end 41b and the right side or end 41a of the main frame 41. At least a portion of the power unit 9 is disposed rightward relative to the left side 41b of the main frame 41 and leftward relative to the right side 41a of the main frame 41. Within the vertical plane that is perpendicular to the vehicle longitudinal direction and through a portion the power unit 9, the portion of the power unit 9 is disposed rightward relative to the left side 41b of the main frame 41 and leftward relative to the right end 41a of the main frame 41.

As illustrated in Figure 5, the power unit 9 includes a crankcase 9A, which accommodates a crankshaft, not shown, and a cylinder unit 9B, which is connected to the crankcase 9A. The cylinder unit 9B extends frontward and obliquely upward from the crankcase 9A. It is also possible that the cylinder unit 9B may extend frontward from the crankcase 9A, or may extend upward from the crankcase 9A. An intake pipe 17 is connected to a rear portion of the cylinder unit 9B. An exhaust pipe 18 is connected to a front portion of the cylinder unit 9B. An air cleaner 19 is connected to the intake pipe 17. The air cleaner 19 is disposed at the rear of the cylinder unit 9B, as viewed from a side view of the vehicle. At least a portion of the air cleaner 19 is disposed upward relative to the crankcase 9A.

The power unit 9 is supported non-swingably by the body frame 4. At least a portion of the power unit 9 is disposed below the main frame 41, as viewed from a side view of the vehicle. In the present preferred embodiment, the entire power unit 9 is disposed below the main frame 41, as viewed from a side view of the vehicle. It is, however, also possible that a portion of the power unit 9 may overlap the main frame 41, as viewed from a side view of the vehicle. The power unit 9 is suspended from the body frame 4. The power unit 9 is secured to the first bracket 21 and the second bracket 22 by fastening members such as a bolt 25. The cylinder unit 9B is supported by the first bracket 21, and the crankcase 9A is supported by the second bracket 22. The method of supporting the power unit 9 by the body frame 4 is not restricted in any way.

As illustrated in Figure 1, a rear arm 11 is supported swingably on the body frame 4. A front end portion 11A of the rear arm 11 is connected to the second bracket 22 (see Figure 4) by a pivot shaft 23. A rear wheel 12 is supported at a rear end portion 11B of the rear arm 11. The rear arm 11 is configured so as to be swingable about the pivot shaft 23.

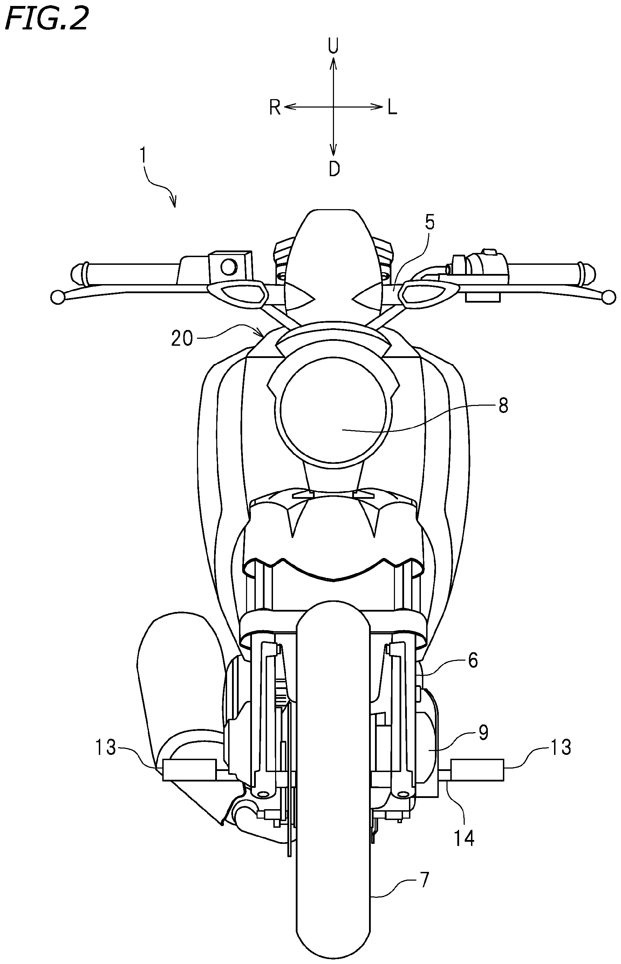

The motorcycle 1 is provided with a pair of left and right footrests 13. Feet 101 of the rider 100 are placed on the footrests 13. As viewed from a side view of the vehicle, each of the footrests 13 is disposed frontward relative to the rear end 2b of the seat 2. As illustrated in Figure 5, the footrests 13 are disposed rearward relative to the front end 9f of the power unit 9, as viewed from a side view of the vehicle. Each of the footrests 13 is disposed downward relative to the main frame 41 and the rear frame 42. As illustrated in Figure 2, each footrest 13 is formed in a rod-like shape. The left and right footrests 13 are connected to each other by a rod 14 extending in a vehicle width direction. The footrests 13 are supported by the rod 14. The rod 14 is attached to a bottom face 9b (see Figure 5) of the power unit 9.

As illustrated in Figure 1, the motorcycle 1 is provided with a storage compartment 20 that can accommodate items to be stored. At least a portion of the storage compartment 20 is disposed behind the head pipe 3, in front of the seat 2, and above the power unit 9. In the present preferred embodiment, a portion of the storage compartment 20 is disposed so as to overlap the main frame 41 as viewed from a side view of the vehicle. However, it is also possible that the entire storage compartment 20 may be disposed upward relative to the main frame 41. As illustrated in Figure 5, at least a portion of the storage compartment 20 is disposed above the air cleaner 19, as viewed from a side view of the vehicle. At least a portion of the storage compartment 20 is disposed frontward relative to the air cleaner 19, as viewed from a side view of the vehicle. At least a portion of the storage compartment 20 is disposed above the power unit 9. In other words, at least a portion of the storage compartment 20 overlaps the power unit 9, as viewed in a plan view of the vehicle.

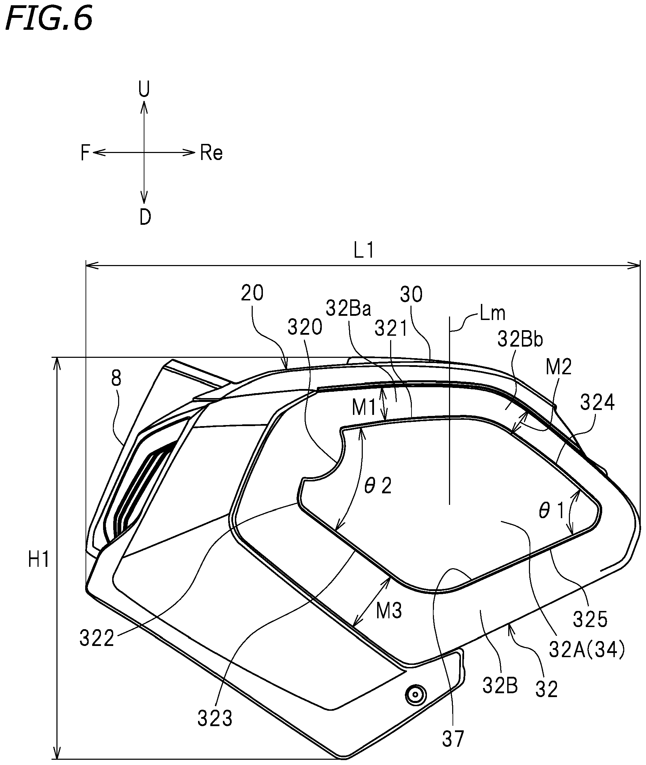

As illustrated in Figure 3, a lateral dimension W1 of the storage compartment 20 is greater than a lateral dimension W2 of the body frame 4. As illustrated in Figure 6, a longitudinal dimension L1 of the storage compartment 20 is greater than a vertical dimension H1 of the storage compartment 20. In addition, the longitudinal dimension L1 of the storage compartment 20 is greater than the lateral dimension W1 (see Figure 3) of the storage compartment 20. These beneficial criteria are true for this preferred embodiment as well as for other embodiments.

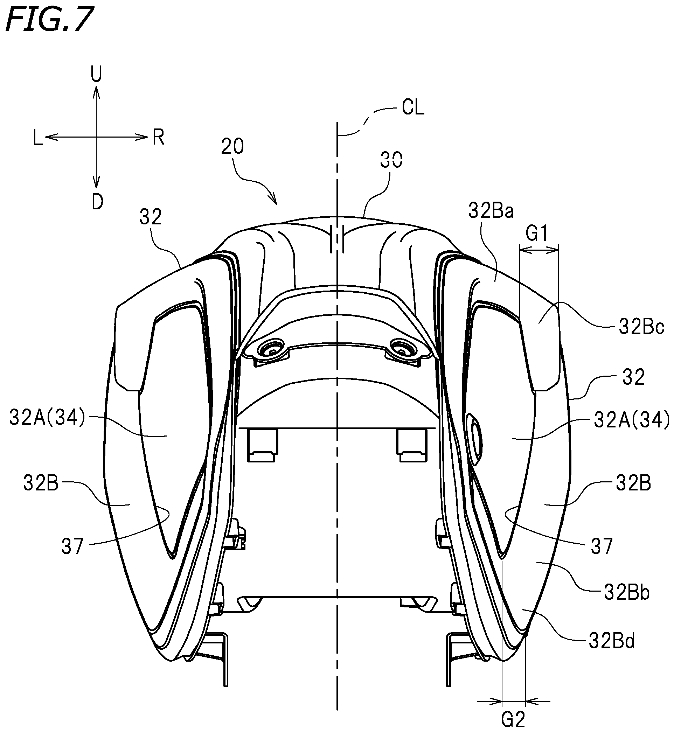

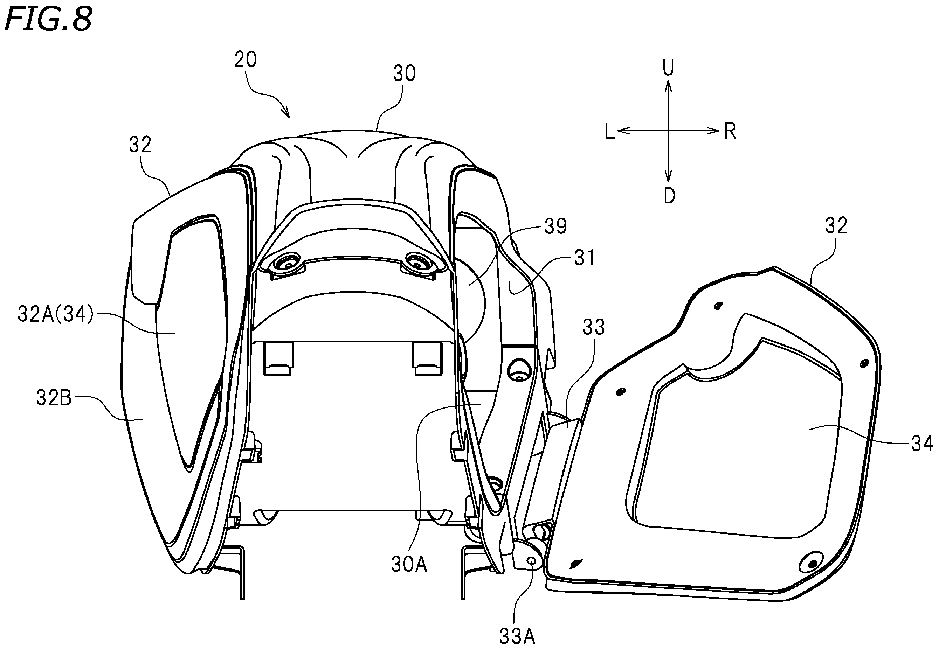

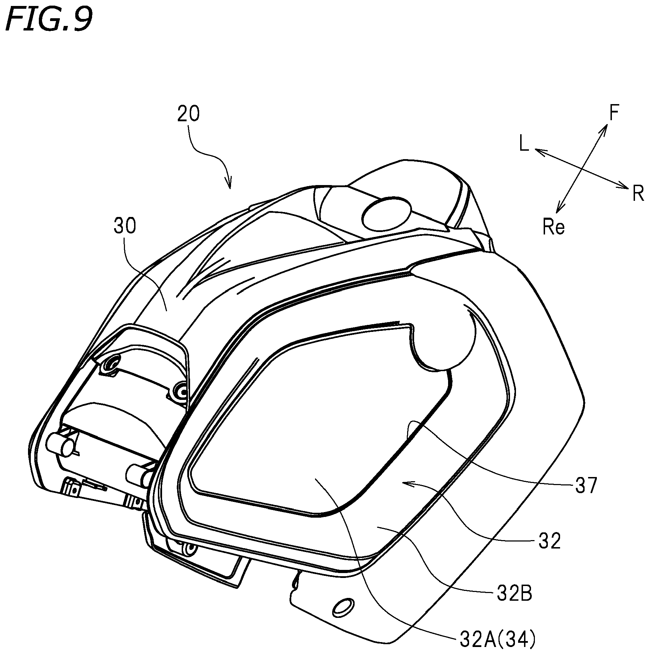

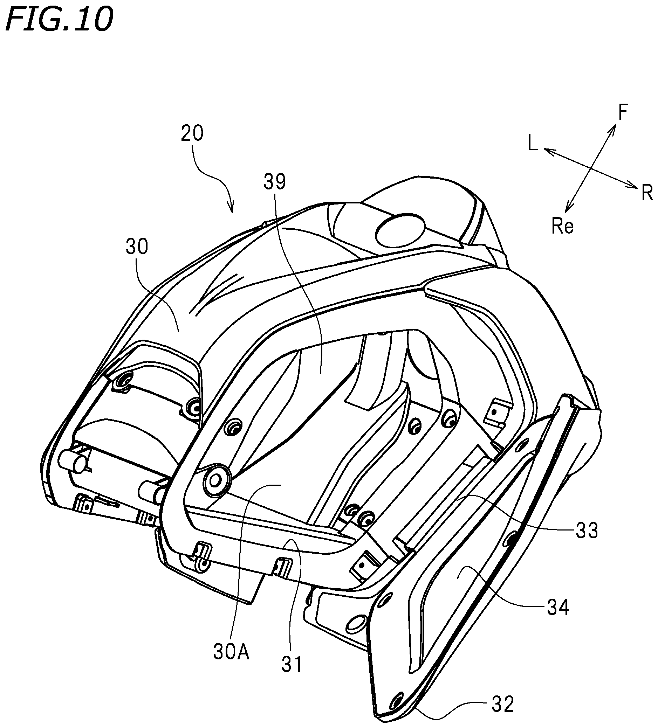

In the present preferred embodiment, the storage compartment 20 is integrated with the front cover 8. However, it is also possible that the storage compartment 20 and the front cover 8 may be separated or separable from each other. The storage compartment 20 includes a storage box 30 and side covers 32. Each of the side covers 32 is configured to be freely opened and closed. Figures 7 and 8 are rear views of the storage compartment 20, wherein Figure 7 shows the state in which the side covers 32 are closed and Figure 8 shows the state in which one of the side covers 32 is open. Figures 9 and 10 are perspective views of the storage compartment 20, wherein Figure 9 shows the state in which the side covers 32 are closed, and Figure 10 shows the state in which one of the side covers 32 is open.

As illustrated in Figure 10, a storage space 39 is provided in the storage box 30. An opening 31 communicating with the storage space 39 is provided in at least one lateral side of the storage box 30. In the present preferred embodiment, the opening 31 is provided in both the left portion and the right portion of the storage box 30. The opening 31 may be provided in only one of the left portion and the right portion of the storage box 30. Various items may be stored in the storage box 30. For example, as illustrated in Figure 5, a helmet 200 can be stored in the storage box 30. The storage box 30 is provided with a bottom plate 30A for supporting the stored items. An inner wall 30U of the storage box 30 may have a round shape. Taking into consideration that a helmet 200 with a round shape may be stored therein, the inner wall 30U of the storage box 30 may have a round portion 30K corresponding to the round shape of the helmet 200. This makes it possible to reduce the unused space within the storage box 30 when storing the helmet 200 in the storage box 30. It should be noted, however, that the foregoing is merely an example, and the shape of the inner wall 30U of the storage box 30 is not restricted in any way.

As illustrated in Figures 9 and 10, each of the side covers 32 is disposed laterally outward of the respective opening 31 of the storage box 30. As illustrated in Figure 7, the right side cover 32 is disposed to the right of the right opening 31 of the storage box 30, and the left side cover 32 is disposed to the left of the left opening 31 of the storage box 30. It should be noted that the term "laterally outward" in this description means a direction away from the vehicle center line CL, and the term "laterally inward" means a direction toward the vehicle center line CL. The side cover 32 is attached to the storage box 30 and is configured to be capable of opening and closing the opening 31.

As illustrated in Figure 8, each of the side covers 32 is joined to the storage box 30 by a hinge mechanism 33. The hinge mechanism 33 is disposed downward relative to the opening 31. The hinge mechanism 33 includes a pivot shaft 33A for pivotably supporting the side cover 32 on the storage box 30. The pivot shaft 33A is disposed so as to extend rearward and obliquely downward. The pivot shaft 33A is disposed along the main frame 41, as viewed from a side view of the vehicle. The pivot shaft 33A is disposed parallel to the main frame 41, as viewed from a side view of the vehicle. The side cover 32 is configured to be pivotable rightward and leftward around the pivot shaft 33A. The side cover 32 is configured to be pivotable about a lower portion of the side cover 32.

The right side cover 32 is configured so as to open the right opening 31 by pivoting rightward and to close the right opening 31 by pivoting leftward. Although the description is omitted, the left side cover 32 is also configured so as to be capable of opening and closing the left opening 31 of the storage box 30 in a like manner. By opening the side cover 32, items can be put into and/or taken out of the storage box 30 via a side. The angle of the pivoting of the side cover 32 is not particularly limited, but may be 90 degrees, for example. The side cover 32 can be configured so as to be laid horizontally when it is opened. Alternatively, the pivot angle of the side cover can be greater than 90 degrees so that items can easily be put in and taken out.

It should be noted that the above-described configuration and arrangement of the hinge mechanism 33 are merely exemplary, and the configuration and arrangement of the hinge mechanism 33 are not particularly restricted. As in the above-described configuration, the hinge mechanism 33 can be disposed downward relative to the opening 31, or can be disposed frontward, upward, or rearward relative to the opening 31. Moreover, the mechanism for joining the side cover 32 to the storage box 30 is not limited to the hinge mechanism 33.

As illustrated in Figures 6 and 7, each of the side covers 32 includes a protruding portion 32B provided in or on at least a portion of an outer peripheral portion of the side cover 32 as viewed from a side view of the vehicle and protruding in a vehicle width direction, and a recessed portion 32A provided in a central portion of the side cover 32, which is surrounded by the outer peripheral portion, and recessed in a vehicle width direction relative to the protruding portion 32B. In the present preferred embodiment, the protruding portion 32B is provided in or on the entire outer peripheral portion of the side cover 32 and is formed in a frame shape (or in an annular shape) that surrounds the entire perimeter of the recessed portion 32A. It is also possible, however, that the protruding portion 32B may not necessarily surround the entire perimeter of the recessed portion 32A. In the right side cover 32, the protruding portion 32B protrudes rightward, and the recessed portion 32A is recessed leftward. In the left side cover 32, the protruding portion 32B protrudes leftward, and the recessed portion 32A is recessed rightward.

In Figure 6, the line Lm is the line that indicates the mid position of the side cover 32 along the vehicle longitudinal direction. The protruding portion 32B includes a strip-shaped front protruding portion 32Ba and a strip-shaped rear protruding portion 32Bb. As viewed from a side view of the vehicle, the front protruding portion 32Ba is positioned frontward relative to a longitudinal center position Lm of the side cover 32 and the rear protruding portion 32Bb is positioned rearward relative to the longitudinal center position Lm. The width M1 of the front protruding portion 32Ba is greater than the width M2 of the rear protruding portion 32Bb. It should be noted that the term "width of the protruding portion" herein means the distance between the outer edge and the inner edge of the protruding portion. In addition, as viewed from a side view of the vehicle, the width (e.g. the just-mentioned width M1) of the portion of the side cover 32 that is positioned upward relative to the vertically mid position thereof is smaller than the width M3 of the portion of the side cover 32 that is positioned downward relative to the vertically mid position.

As illustrated in Figure 7, the protruding portion 32B is inclined laterally more inwardly toward the recessed portion 32A, with respect to the vertical plane. The portion of the protruding portion 32B that is positioned upward relative to the recessed portion 32A is inclined laterally more inwardly toward the bottom. The portion of the protruding portion 32B that is positioned downward relative to the recessed portion 32A is inclined laterally more inwardly toward the top. The front protruding portion 32Ba and the rear protruding portion 32Bb are inclined laterally more inwardly toward the recessed portion 32A. As illustrated in Figure 1, a leg 102 of the rider 100 is pressed against the protruding portion 32B. Because the protruding portion 32B is inclined in the above-described manner, the rider 100 can easily bring the leg 102 into close contact with the protruding portion 32B. The rider 100 can perform the knee grip action easily.

As illustrated in Figure 7, the protruding dimension G1 of the front end portion 32Bc of the protruding portion 32B is greater than the protruding dimension G2 of the rear end portion 32Bd of the protruding portion 32B.

Although the recessed portion 32A and the protruding portion 32B can be an integrated part, such are separate parts in the present preferred embodiment. A hole 37 is provided inside the protruding portion 32B. The hole 37 is closed by a lid 34. A portion of the lid 34 that is visible through the hole 37 forms the recessed portion 32A. The recessed portion 32A is constituted by at least a portion of the lid 34, which closes the hole 37. The lid 34 is attached to the side cover 32. Although the lid 34 may be non-detachably attached to the side cover 32, it is detachably attached to the side cover 32 in the present preferred embodiment. Herein, the lid 34 is fastened to a back side portion of the side cover 32 by screws (not shown).

Next, the position and shape of the recessed portion 32A as viewed from a side view of the vehicle will be described below. In the present preferred embodiment, the recessed portion 32A is constituted by a portion of the lid 34 that is visible through the hole 37, as described above. This means that, as viewed from a side view of the vehicle, the shape of the contour of the recessed portion 32A is in agreement with the shape of the contour of the hole 37.

As illustrated in Figure 4, at least a portion of the recessed portion 32A is positioned on the same vertical line V1 as is the bottom end portion 41V of the main frame 41, as viewed from a side view of the vehicle. As viewed from a side view of the vehicle, the top end 32At of the recessed portion 32A is positioned upward relative to the top end 41t of the main frame 41 and relative to the top end 42t of the rear frame 42. The bottom end 32Ab of the recessed portion 32A is positioned downward relative to the top end 41t of the main frame 41 and relative to the top end 42t of the rear frame 42.

As illustrated in Figure 6, as viewed from a side view of the vehicle, the recessed portion 32A includes a circular arc-shaped edge 320 concaved toward the rear, a first upper edge 321 extending rearward from the top end of the circular arc-shaped edge 320, a front edge 322 extending downward from the bottom end of the circular arc-shaped edge 320, and a first lower edge 323 extending rearward and obliquely downward from the bottom end of the front edge 322. In addition, the recessed portion 32A includes a second upper edge extending rearward and obliquely downward from the rear end of the first upper edge 321, and a second lower edge 325 extending obliquely upward from the first lower edge 323. The rear end of the second upper edge 324 and the rear end of the second lower edge 325 are joined. As viewed from a side view of the vehicle, beneficially the angle θ1 formed by the second upper edge 324 and the second lower edge 325 is smaller than the angle θ2 formed by the first upper edge 321 and the first lower edge 323. As viewed from a side view of the vehicle, the recessed portion 32A is formed in a rewardly tapered shape.

As illustrated in Figure 3, the motorcycle 1 has a fuel tank 28 for storing fuel. As illustrated in Figure 5, at least a portion of the fuel tank 28 is disposed rearward relative to the storage compartment 20. It is also possible that the entire fuel tank 28 may be disposed rearward relative to the storage compartment 20. As illustrated in Figure 3, at least a portion of the fuel tank 28 is disposed so as to overlap the seat 2, as viewed in a plan view of the vehicle. In the present preferred embodiment, the entire fuel tank 28 is disposed so as to overlap the seat 2 as viewed in a plan view of the vehicle. As illustrated in Figure 5, at least a portion of the fuel tank 28 overlaps the rear frame 42, as viewed from a side view of the vehicle.

As illustrated in Figure 1, the rider 100 performs a knee grip action while riding the motorcycle 1. More specifically, when riding the motorcycle 1, the rider 100 holds the portion frontward relative to the seat 2, in other words, the storage compartment 20, between left and right legs 102. This allows the rider to keep his/her body in a stable position. As described previously, each of the side covers 32 of the storage compartment 20 includes the recessed portion 32A recessed in a vehicle width direction. This enables the rider 100 to press a portion of each leg 102 against each recessed portion 32A so that he/she does not need to open left and right legs 102 wide. Thus, the rider 100 is allowed to perform the knee grip action easily.

As thus far described, in the vehicle configuration in which at least a portion of the power unit 9 is disposed below the storage compartment 20, the motorcycle 1 according to the present preferred embodiment makes it possible to ensure a large storage space by enlarging the storage compartment 20 laterally outward. An opening 31 is provided in at least one lateral side of the storage box 30. A side cover 32 is disposed laterally outward of the storage box 30, and the opening 31 is opened and closed by the side cover 32. No constituent component of the vehicle exists laterally outward of the side cover 32, so it is unlikely that the side cover interferes with other vehicle's constituent components when opening the side cover 32. Therefore, even if the lateral dimension of the storage box 30 is increased, the open and close operations of the side cover 32 are performed smoothly, and the storage space 39 of the storage box 30 may be made larger.

Moreover, because the side cover 32 does not easily interfere with other constituent components of the vehicle, it is possible to form the side cover 32 with a relatively large size. By increasing the size of the side cover 32, the size of the opening 31 of the storage box 30 can be increased accordingly. As a result, when the side cover 32 is opened, it is relatively easy to visually confirm the storage space in the storage box 30. With the present preferred embodiment, usability of the storage compartment 20 is enhanced.

With the present preferred embodiment, because the protruding portion 32B is provided in at least a portion of the outer peripheral portion of the side cover 32, sufficient rigidity is ensured for the side cover 32 without increasing the thickness of the entire side cover 32 uniformly. Even when the side cover 32 is configured to be movable as in the present preferred embodiment, and thereby the side cover 32 needs to have higher rigidity than a fixed-type side cover, sufficient rigidity can be ensured for the side cover 32. Therefore, the thickness of the entire side cover 32 is not increased uniformly, but the recessed portion 32A is provided in a central portion of the side cover 32. The provision of the recessed portion 32A enables the rider 100 to perform the knee grip action easily.

Thus, the present preferred embodiment makes it possible to obtain both sufficient storage space 39 and a good ride quality in the motorcycle 1 that has the power unit 9 non-swingably supported by the main frame 4 and the storage compartment 20 at least a portion of which is disposed behind the head pipe 3, in front of the seat 2, and above the power unit 9.

As illustrated in Figure 4, the main frame 41 is formed in a V-shape as viewed from a side view of the vehicle. The portion within the space above the main frame 41 that is located on the same vertical line V1 as is the bottom end portion 41V of the main frame 41 is where a sufficient vertical dimension is obtained most easily. In the present preferred embodiment, a portion of the storage compartment 20 is positioned on the same vertical line V1 as is the bottom end portion 41V of the main frame 41, as viewed from a side view of the vehicle. As a result, the storage compartment 20 is allowed to have a sufficient vertical dimension easily. The present preferred embodiment makes it possible to ensure sufficient storage space 39 for the storage compartment 20. Moreover, in the present preferred embodiment, a portion of the recessed portion 32A of the side cover 32 is positioned on the same vertical line V1 as is the bottom end portion 41V of the main frame 41, as viewed from a side view of the vehicle. Because the recessed portion 32A is provided in a region of the side cover 32 in which a sufficient vertical dimension is obtained easily, the recessed portion 32A is allowed to have a large area as viewed from a side view of the vehicle. Therefore, the rider is allowed to perform the knee grip action more easily, and the ride quality is improved.

As illustrated in Figure 4, the top end 32At of the recessed portion 32A of the side cover 32 is positioned upward relative to the top end 41t t of the main frame 41 and relative to the top end 42t of the rear frame 42, and the bottom end 32Ab of the recessed portion 32A of the side cover 32 is positioned downward relative to the top end 41t of the main frame 41 and relative to the top end 42t of the rear frame 42. The present preferred embodiment, along with other possible embodiments, makes it possible to dispose the recessed portion 32A at a position where it is easy for the rider 100 to perform the knee grip action. Therefore, ride quality is further improved.

In the present preferred embodiment, the side cover 32 includes a hole 37 provided therein, and the recessed portion 32A is constituted by at least a portion of a lid 34 for closing the hole 37. When storing an item that is smaller than the hole 37 in the storage compartment 20, the stored item is prevented from falling out of the storage compartment 20 by closing the hole 37 with the lid 34. In addition, the lid 34 is detachably attached to the side cover 32. With the present preferred embodiment, along with other possible embodiments, the lid 34 can be removed from the side cover 32, so the hole(s) 37 can be utilized in place of the recessed portion 32A. This beneficially makes it possible to put an item in the storage compartment 20 so that part of the item may stick out through the hole 37, so it becomes possible to utilize the region laterally outward of the hole 37 as a part of the storage space. Moreover, it becomes possible for the rider 100 to insert part of the leg 102 into the hole 37, and the knee grip action becomes further easier. Thus, by removing the lid 34 from the side cover 32, it is possible to achieve both sufficient storage space and a good ride quality at a higher level. In the present preferred embodiment, because the lid 34 is detachably attached to the side cover 32, the recessed portion 32A or the hole 37 can be selectively used depending on the needs.

As illustrated in Figure 6, as viewed from a side view of the vehicle, the recessed portion 32A is formed in a rewardly tapered shape. This allows the rider 100 to perform the knee grip action easily.

As illustrated in Figure 3, a lateral dimension W1 of the storage compartment 20 is greater than a lateral dimension W2 of the body frame 4. The present preferred embodiment makes it possible to provide a large storage space 39 because the storage compartment 20 has a large lateral dimension W1.

As illustrated in Figure 6, in the present preferred embodiment, the vertical dimension H1 of the storage compartment 20 is smaller than the longitudinal dimension L1 of the storage compartment 20. Therefore, at least a portion of the storage compartment 20 can be disposed behind the head pipe 3, in front of the seat 2, and above the power unit 9, while a sufficient volume is ensured for the storage space 39. Moreover, because the lateral dimension W1 of the storage compartment 20 is smaller than the longitudinal dimension L1 of the storage compartment 20, the rider 100 is allowed to perform the knee grip action easily while a sufficient volume is ensured for the storage space 39.

In the present preferred embodiment, the side cover 32 is configured to be capable of being opened and closed, and the side cover 32 is opened or closed when putting items in and taking them out. For this reason, it is highly necessary to ensure sufficient rigidity for the side cover 32. As illustrated in Figure 7, the protruding portion 32B is provided in the entire outer peripheral portion of the side cover 32 and is formed in a frame shape surrounding the entire perimeter of the recessed portion 32A. Because the side cover 32 is provided with such a protruding portion 32B, the rigidity of the side cover 32 is increased.

As illustrated in Figure 6, the protruding portion 32B includes a strip-shaped front protruding portion 32Ba and a strip-shaped rear protruding portion 32Bb. As viewed from a side view of the vehicle, the front protruding portion 32Ba is positioned frontward relative to the longitudinal center position Lm of the side cover 32 and the rear protruding portion 32Bb is positioned rearward relative to the longitudinal center position Lm. The width M2 of the rear protruding portion 32Bb is smaller than the width M1 of the front protruding portion 32Ba, so the width M2 of the rear protruding portion 32Bb is relatively small. Therefore, the rider 100 is allowed to perform the knee grip action easily. The width M1 of the front protruding portion 32Ba is greater than the width M2 of the rear protruding portion 32Bb, so the width M1 of the front protruding portion 32Ba is relatively large. Therefore, sufficient rigidity is ensured for the side cover 32. The present preferred embodiment enables the rider 100 to perform the knee grip action easily while ensuring sufficient rigidity for the side cover 32.

As illustrated in Figure 7, the rear protruding portion 32Bb is inclined laterally more inwardly toward the recessed portion 32A, with respect to the vertical plane. This enables the rider 100 to place the leg 102 along the rear protruding portion 32Bb. Therefore, the rider 100 is allowed to perform the knee grip action easily.

Furthermore, the protruding dimension G1 of the front end portion 32Bc of the protruding portion 32B is greater than the protruding dimension G2 of the rear end portion 32Bd. Thus, the protruding dimension G1 of the front end portion 32Bc is relatively large, so it is easy to ensure sufficient rigidity for the side cover 32. On the other hand, the protruding dimension G2 of the rear end portion 32Bd is relatively small, so the rider 100 is allowed to perform the knee grip action easily. The present preferred embodiment enables the rider 100 to perform the knee grip action easily while ensuring sufficient rigidity for the side cover 32.

As illustrated in Figure 5, the motorcycle 1 is provided with a footrest(s) 13. The/each footrest 13 is disposed, as viewed from a side view of the vehicle, rearward relative to the front end 9f of the power unit 9, frontward relative to the rear end 2b (see Figure 1) of the seat 2, and downward relative to the main frame 41 and the rear frame 42. As illustrated in Figure 1, the rider 100 can easily bring a portion of the leg 102 into close contact with the recessed portion 32A of the side cover 32 when the rider 100 sits on the seat 2 and places the foot 101 on the footrest 13. Therefore, the rider 100 is allowed to perform the knee grip action easily.

As illustrated in Figure 3, at least a portion of the fuel tank 28 is disposed so as to overlap the seat 2 as viewed in a plan view of the vehicle. In the present preferred embodiment, the fuel tank 28 is not entirely disposed in front of the seat 2, so sufficient space is provided in front of the seat 2. Thus, without being hindered by the fuel tank 28, the storage compartment 20 is allowed to have large dimensions.

As illustrated in Figure 5, at least a portion of the fuel tank 28 overlaps the rear frame 42 as viewed from a side view of the vehicle. Therefore, the position of the seat 2 can be set lower than the case in which the entire fuel tank 28 is disposed upward relative to the rear frame 42. Therefore, the rider 100 is allowed to perform the knee grip action in a comfortable riding position.

As illustrated in Figure 8, each of the side covers 32 is advantageously joined to the storage box 30 by a hinge mechanism 33. The side cover 32 pivots about the pivot shaft 33A extending rearward and obliquely downward. Accordingly, the side cover 32 pivots in a vehicle width direction and thereby opens and closes the opening 31 of the storage box 30. As illustrated in Figure 4, as viewed in a plan view of the vehicle, the front-half portion of the main frame 41 extends rearward and obliquely downward. The pivot shaft 33A of the hinge mechanism 33 is disposed along the front-half portion of the main frame 41, as viewed from a side view of the vehicle. The side cover 32 can be opened and closed without being hindered by the main frame 41. The pivot amount of the side cover 32 can be set large, so the opening 31 of the storage box 30 can be opened large accordingly. Thus, usability of the storage compartment 20 is further enhanced.

Although one preferred embodiment of the present invention has been described hereinabove, it should be understood that the foregoing preferred embodiment is merely exemplary, and that various other modifications may be made without departing from the scope of the present invention.

In the foregoing preferred embodiment, both the side covers 32 are configured to be capable of being opened and closed. However, it is also possible that one of the left and right side covers 32 may be configured to be capable of being opened and closed and the other one is configured to be incapable of being opened and closed. In this case, the side cover 32 that is incapable of being opened and closed may either be formed as a separate component from the storage box 30 or integrally formed with the storage box 30. In addition, the protruding portion may not be formed in an annular shape, but it is possible that the protruding portion may be formed in a portion of the outer peripheral portion and the remaining portion of the outer peripheral portion may be smoothly connected to the recessed portion. The main frame 41 is configured to include a first frame portion 41A and a pair of left and right second frame portions 41B. However, it is also possible that the first frame portion 41A and the second frame portions 41B are formed of a single frame member, or it is possible to form a second frame portion 41B using a single frame member and weld the second frame portion 41B to the first frame portion 41A.

### REFERENCE NUMBER LIST

1 - Motorcycle (straddled vehicle)
2 - Seat
3 - Head pipe
4 - Body frame
9 - Power unit
20 - Storage compartment
30 - Storage box
31 - Opening
32 - Side cover
32A - Recessed portion
32B - Protruding portion
41 - Main frame
42 - Rear frame

## Claims

1. A straddled vehicle (1) comprising:
a head pipe (3);
a body frame (4) comprising a main frame (41) extending rearward and
obliquely downward from the head pipe (3) and a rear frame (42) extending rearward and obliquely upward from the main frame (41);
a seat (2), supported by the rear frame (42), for a rider to sit on; a power
unit (9), non-swingably supported by the main frame (41), at least a portion of which is disposed laterally between a left side (41b) and a right side (41a) of the main frame (41)
,and
a storage compartment (20) at least a portion of which is disposed behind the head pipe (3), in front of the seat (2), and above the power unit (9),
the storage compartment (20) comprising:
a storage box (30) comprising a storage space (39) provided therein, and at least one opening (31) provided in at least one lateral side thereof and communicating with the storage space (39); and
at least one side cover (32) disposed laterally outward relative to the at least one opening (31) of the storage box (30), attached to the storage box (30), and configured to be capable of opening and closing the at least opening (31), at least a portion of the power unit (9) is disposed below the main frame (41) as viewed from a side view of the vehicle and wherein
the or each side cover (32) comprises a protruding portion (32B), provided in at least a portion of an outer peripheral portion of the side cover (32) as viewed from a side view of the vehicle and protruding in a vehicle width direction, and a recessed or open portion (32A), provided in a central portion thereof surrounded by the outer peripheral portion, and recessed in a vehicle width direction relative to the protruding portion (32B).

2. The straddled vehicle (1) according to claim 1, wherein:
the main frame (41) is formed in a V-shape as viewed from a side view of the vehicle; and
at least a portion of the recessed portion (32A) of the or each side cover (32) is positioned on the same vertical line (V1) as is a bottom end portion (41V) of the main frame (41), as viewed from a side view of the vehicle.

3. The straddled vehicle (1) according to claim 1 or 2, wherein, as viewed from a side view of the vehicle, a top end (32At) of the recessed portion (32A) of the or each side cover (32) is positioned upward relative to a top end (41t) of the main frame (41) and a top end (42t) of the rear frame (42), and a bottom end (32Ab) of the recessed portion (32A) of the side cover (32) is positioned downward relative to the top end (41t) of the main frame (41) and the top end (42t) of the rear frame (42).

4. The straddled vehicle (1) according to any one of claims 1 to 3, wherein:
the or each side cover (32) comprises a hole (37) provided therein; and
the recessed portion (32A) is provided by at least a portion of a lid (34) which is detachably attached to the side cover (32) and configured to close the hole (37).

5. The straddled vehicle (1) according to any one of claims 1 to 4, wherein the recessed portion (32A) is formed in a rearwardly tapered shape, as viewed from a side view of the vehicle.

6. The straddled vehicle (1) according to any one of claims 1 to 5, wherein a lateral dimension (W1) of the storage compartment (20) is greater than a lateral dimension (W2) of the body frame (4).

7. The straddled vehicle (1) according to any one of claims 1 to 6, wherein a longitudinal dimension (L1) of the storage compartment (20) is greater than a lateral dimension (W1) of the storage compartment (20) and greater than a vertical dimension (H1) of the storage compartment (20).

8. The straddled vehicle (1) according to any one of claims 1 to 7, wherein the protruding portion (32B) is provided in the entire outer peripheral portion of the side cover (32) and formed in a frame shape surrounding an entire perimeter of the recessed portion (32A).

9. The straddled vehicle (1) according to any one of claims 1 to 8, wherein:
the protruding portion (32B) includes a strip-shaped front protruding portion (32Ba) and a strip-shaped rear protruding portion (32Bb), and as viewed from a side view of the vehicle, the front protruding portion (32Ba) is positioned frontward relative to a longitudinal center position (Lm) of the side cover (32) and the rear protruding portion (32Bb) is positioned rearward relative to the longitudinal center position (Lm); and
a width (M1) of the front protruding portion (32Ba) is greater than a width (M2) of the rear protruding portion (32Bb).

10. The straddled vehicle (1) according to any one of claims 1 to 8, wherein:
the protruding portion (32B) comprises a strip-shaped rear protruding portion (32Bb) positioned rearward relative to a longitudinal center position (Lm) of the side cover (32); and
the rear protruding portion (32Bb) is inclined laterally more inwardly toward the recessed portion (32A) with respect to a vertical plane.

11. The straddled vehicle (1) according to any one of claims 1 to 10, wherein a protruding dimension (G1) of a front end portion (32Bc) of the protruding portion (32B) is greater than a protruding dimension (G2) of a rear end portion (32Bd) of the protruding portion (32B).

12. The straddled vehicle (1) according to any one of claims 1 to 11, further comprising a footrest (13) disposed, as viewed from a side view of the vehicle, rearward relative to a front end (9f) of the power unit (9), frontward relative to a rear end (2b) of the seat (2), and downward relative to the main frame (41) and the rear frame (42).

13. The straddled vehicle (1) according to any one of claims 1 to 12, further comprising a fuel tank (28) at least a portion of which is disposed so as to overlap the seat (2) as viewed in a plan view of the vehicle.

14. The straddled vehicle (1) according to claim 13, wherein at least a portion of the fuel tank (28) overlaps the rear frame (42) as viewed from a side view of the vehicle.

15. The straddled vehicle (1) according to any one of claims 1 to 14, further comprising:
a hinge mechanism (33) comprising a pivot shaft (33A) pivotably supporting the or each side cover (32) on the storage box (30) and joining the side cover (32) and the storage box (30) to each other, wherein
the pivot shaft (33A) is disposed so as to extend rearward and obliquely downward.

## Patentansprüche

1. Grätschsitzfahrzeug (1), umfassend:
ein Kopfrohr (3);
einen Körperrahmen (4), umfassend einen Hauptrahmen (41), welcher sich nach hinten und schräg nach unten vom Kopfrohr (3) erstreckt und einen hinteren Rahmen (42), welcher sich nach hinten und schräg nach oben vom Hauptrahmen (41) erstreckt;
einen Sitz (2), welcher vom hinteren Rahmen (42) gehaltert ist, damit ein Fahrer auf demselben sitzen kann;
eine Antriebseinheit (9), welche vom Hauptrahmen (41) schwenkfest gehaltert ist, wobei zumindest ein Abschnitt davon zwischen einer linken Seite (41b) und einer rechten Seite (41a) des Hauptrahmens (41) seitlich angeordnet ist, und
ein Ablagefach (20), wobei zumindest ein Abschnitt davon hinter dem Kopfrohr (3), vor dem Sitz (2) und oberhalb der Antriebseinheit (9) angeordnet ist,
wobei das Ablagefach (20) umfasst:
eine Ablageschachtel (30), umfassend einen in derselben bereitgestellten Ablageraum (39), und zumindest eine Öffnung (31), welche in zumindest einer lateralen Seite davon bereitgestellt ist und welche mit dem Ablageraum (39) in Verbindung steht; und
zumindest eine Seitenabdeckung (32), welche seitlich und außenseitig in Bezug zu der zumindest einen Öffnung (31) der Ablageschachtel (30) angeordnet ist, an der Ablageschachtel (30) befestigt ist und konfiguriert ist, um die zumindest eine Öffnung (31) öffnen und schließen zu können, **dadurch gekennzeichnet, dass**
zumindest ein Abschnitt der Antriebseinheit (9), in einer Seitensicht des Fahrzeugs gesehen, unterhalb des Hauptrahmens (41) angeordnet ist, und wobei
die oder jede Seitenabdeckung (32) einen vorstehenden Abschnitt (32B), welcher, in einer Seitenansicht des Fahrzeuges gesehen, in zumindest einem Abschnitt eines äußeren Umfangsabschnitts der Seitenabdeckung (32) bereitgestellt ist, und welcher in der Fahrzeugbreitenrichtung vorsteht, und einen vertieften oder offenen Abschnitt (32A) umfasst, welcher in einem mittleren Abschnitt davon bereitgestellt ist, welcher von dem äußeren Umfangsabschnitt umschlossen ist, und welcher in einer Fahrzeugbreitenrichtung in Bezug zu dem vorstehenden Abschnitt (32B) vertieft ist.

2. Grätschsitzfahrzeug (1) nach Anspruch 1, wobei:
der Hauptrahmen (41), in einer Seitenansicht des Fahrzeugs gesehen, V-förmig ist; und
zumindest ein Abschnitt des vertieften Abschnitts (32A) der oder jeder Seitenabdeckung (32), in einer Seitenansicht des Fahrzeugs gesehen, auf derselben senkrechten Linie (V1) des unteren Endabschnitts (41V) des Hauptrahmens (41) angeordnet ist.

3. Grätschsitzfahrzeug (1) nach Anspruch 1 oder 2, wobei, in einer Seitenansicht des Fahrzeugs gesehen, ein oberes Ende (32At) des vertieften Abschnitts (32A) der oder jeder Seitenabdeckung (32) nach oben relativ zu einem oberen Ende (41t) des Hauptrahmens (41) und einem oberen Ende (42t) des hinteren Rahmens (42) angeordnet ist, und ein unteres Ende (32Ab) des vertieften Abschnitts (32A) der Seitenabdeckung (32) nach unten relativ zum oberen Ende (41t) des Hauptrahmens (41) und dem oberen Ende (42t) des hinteren Rahmens (42) angeordnet ist.

4. Grätschsitzfahrzeug (1) nach einem der Ansprüche 1 bis 3, wobei:
die oder jede Seitenabdeckung (32) ein Loch (37) umfasst, welches darin bereitgestellt ist; und
der vertiefte Abschnitt (32A) durch zumindest einen Abschnitt eines Deckels (34) ausgebildet ist, welcher lösbar an der Seitenabdeckung (32) befestigt ist und konfiguriert ist, um das Loch (37) zu schließen.

5. Grätschsitzfahrzeug (1) nach einem der Ansprüche 1 bis 4, wobei der vertiefte Abschnitt (32A), in einer Seitenansicht des Fahrzeugs gesehen, eine nach hinten verjüngte Form aufweist.

6. Grätschsitzfahrzeug (1) nach einem der Ansprüche 1 bis 5, wobei eine seitliche Abmessung (W1) des Ablagefachs (20) größer als eine seitliche Abmessung (W2) des Körperrahmens (4) ist.

7. Grätschsitzfahrzeug (1) nach einem der Ansprüche 1 bis 6, wobei eine Längenabmessung (L1) des Ablagefachs (20) größer als eine seitliche Abmessung (W1) des Ablagefachs (20) und größer als eine senkrechte Abmessung (H1) des Ablagefachs (20) ist.

8. Grätschsitzfahrzeug (1) nach einem der Ansprüche 1 bis 7, wobei der vorstehende Abschnitt (32B) im gesamten äußeren Umfangsabschnitt der Seitenabdeckung (32) bereitgestellt ist und so geformt ist, dass er den gesamten Umfang des vertieften Abschnitts (32A) umschließt.

9. Grätschsitzfahrzeug (1) nach einem der Ansprüche 1 bis 8, wobei:
der vorstehende Abschnitt (32B) einen streifenförmigen vorderen vorstehenden Abschnitt (32Ba) und einen streifenförmigen hinteren vorstehenden Abschnitt (32Bb) einschließt, und, in einer Seitenansicht des Fahrzeugs gesehen, der vordere vorstehende Abschnitt (32Ba) vor der längsseitigen Mittelposition (Lm) der Seitenabdeckung (32) angeordnet ist und der hintere vorstehende Abschnitt (32Bb) hinter der längsseitigen Mittelposition (Lm) angeordnet ist; und
die Breite (M1) des vorderen vorstehenden Abschnitts (32Ba) größer als die Breite (M2) des hinteren vorstehenden Abschnitts (32Bb) ist.

10. Grätschsitzfahrzeug (1) nach einem der Ansprüche 1 bis 8, wobei:
der vorstehende Abschnitt (32B) einen streifenförmigen hinteren vorstehenden Abschnitt (32Bb) umfasst, welcher hinter einer längsseitigen Mittelposition (Lm) der Seitenabdeckung (32) angeordnet ist; und
der hintere vorstehende Abschnitt (32Bb) seitlich mehr nach innen zum vertieften Abschnitt (32A) hin geneigt ist im Verhältnis zu einer senkrechten Ebene.

11. Grätschsitzfahrzeug (1) nach einem der Ansprüche 1 bis 10, wobei eine vorstehende Abmessung (G1) eines vorderen Endabschnitts (32Bc) des vorstehenden Abschnitts (32B) größer ist als eine vorstehende Abmessung (G2) eines hinteren Endabschnitts (32Bd) des vorstehenden Abschnitts (32B) ist.

12. Grätschsitzfahrzeug (1) nach einem der Ansprüche 1 bis 11, ferner umfassend eine Fußstütze (13), welche, in einer Seitenansicht des Fahrzeugs gesehen, hinter einem vorderen Ende (9f) der Antriebseinheit (9), vor einem hinteren Ende (2b) des Sitzes (2) und unterhalb des Hauptrahmens (41) und des hinteren Rahmens (42) angeordnet ist.

13. Grätschsitzfahrzeug (1) nach einem der Ansprüche 1 bis 12, ferner umfassend einen Treibstofftank (28), wobei zumindest ein Abschnitt davon so angeordnet ist, dass er, in einer Planansicht des Fahrzeugs gesehen, den Sitz (2) überlappt.

14. Grätschsitzfahrzeug (1) nach Anspruch 13, wobei zumindest ein Abschnitt des Treibstofftanks (28), in einer Seitenansicht des Fahrzeugs gesehen, den hinteren Rahmen (42) überlappt.

15. Grätschsitzfahrzeug (1) nach einem der Ansprüche 1 bis 14, ferner umfassend:
einen Scharniermechanismus (33), umfassend eine Schwenkwelle (33A), welche die oder jede Seitenabdeckung (32) auf der Ablageschachtel (30) schwenkbar haltert und die Seitenabdeckung (32) und die Ablageschachtel (30) miteinander verbindet, wobei
die Schwenkwelle (33A) so angeordnet ist, dass sie sich nach hinten und schräg nach unten erstreckt.

## Revendications

1. Véhicule à califourchon (1), comprenant :
un tube de tête (3) ;
un cadre de châssis (4) comprenant un cadre principal (4) s'étendant vers l'arrière et de manière oblique vers le bas à partir du tube de tête (3) et un cadre arrière (42) s'étendant vers l'arrière et de manière oblique vers le haut à partir du cadre principal (41);
un siège (2) supporté par le cadre arrière (42) sur lequel un conducteur peut s'asseoir ;
une unité de puissance (9) supportée de manière non pivotante par le cadre principal (41), au moins une partie de laquelle étant disposée latéralement entre un côté gauche (41b) et un côté droit (41a) du cadre principal (41) ; et
un compartiment de stockage (20), dont au moins une partie est disposée derrière le tube de tête (3), devant le siège (2) et au-dessus de l'unité de puissance (9) ;
le compartiment de stockage (20) comprenant :
un coffret de stockage (30) comprenant un espace de stockage (39) qui y est agencé, et au moins une ouverture (31) formée dans au moins un côté latéral de celui-ci et communiquant avec l'espace de stockage (39) ; et
au moins un couvercle latéral (32) disposé latéralement vers l'extérieur par rapport à la au moins une ouverture (31) du coffret de stockage (30), fixé sur le coffret de stockage (30) et configuré de manière à pouvoir ouvrir et fermer la au moins une ouverture (31), **caractérisé en ce que**
au moins une partie de l'unité de puissance (9) est disposée au-dessous du cadre principal (41), vue dans une vue latérale du véhicule, et déborde dans une direction de la largeur du véhicule, et une partie évidée ou ouverte (32A), agencée dans sa partie centrale, entourée par la partie périphérique externe, et évidée dans une direction de la largeur du véhicule par rapport à la partie en saillie (32B).

2. Véhicule à califourchon (1) selon la revendication 1, dans lequel :
le cadre principal (41) a une forme en V, vu dans une vue latérale du véhicule ; et au moins une partie de la partie évidée (32A) du ou de chaque couvercle latéral (32) est positionnée sur la même ligne verticale (V1) qu'une partie d'extrémité inférieure (41V) du cadre principal (41), vue dans une vue latérale du véhicule.

3. Véhicule à califourchon (1) selon la revendication 1 ou 2, dans lequel, vue dans une vue latérale du véhicule, une extrémité supérieure (32At) de la partie évidée (32A) du ou de chaque couvercle latéral (32) est positionnée vers le haut par rapport à une extrémité supérieure (41t) du cadre principal (41) et à une extrémité supérieure (42t) du cadre arrière (42), et une extrémité inférieure (32Ab) de la partie évidée (32A) du couvercle latéral (32) est positionnée vers le bas par rapport à l'extrémité supérieure (41t) du cadre principal (41) et à l'extrémité supérieure (42t) du cadre arrière (42).

4. Véhicule à califourchon (1) selon l'une quelconque des revendications 1 à 3, dans lequel le ou chaque couvercle latéral (32) comprend un trou (37) qui y est formé ; et
la partie évidée (32A) est établie par au moins une partie d'un couvercle (34) qui est fixée de manière détachable sur le couvercle latéral (32) et configurée de sorte à fermer le trou (37).

5. Véhicue à califourchon (1) selon l'une quelconque des revendications 1 à 4, dans lequel la partie évidée (32A) a une forme effilée vers l'arrière, vue dans une vue latérale du véhicule.

6. Véhicule à califourchon (1) selon l'une quelconque des revendications à 5, dans lequel une dimension latérale (W1) du compartiment de stockage (20) est supérieure à une dimension latérale (W2) du cadre de châssis (4).

7. Véhicule à califourchon (1) selon l'une quelconque des revendications 1 à 6, dans lequel une dimension longitudinale (L1) du compartiment de stockage (20) est supérieure à une dimension latérale (W1) du compartiment de stockage (20) et supérieure à une dimension verticale (H1) du compartiment de stockage (20).

8. Véhicule à califourchon (1) selon l'une quelconque des revendication 1 à 7, dans lequel la partie en saillie (32B) est agencée dans l'ensemble de la partie périphérique externe du couvercle latéral (32) et a une forme en cadre entourant un périmètre entier de la partie évidée (32).

9. Véhicule à califourchon (1) selon l'une quelconque des revendications 1 à 8, dans lequel :
la partie en saillie (32B) inclut une partie en saillie avant en forme de bande (32Ba) et une partie en saillie arrière en forme de bande (32Bb), et dans une vue latérale du véhicule, la partie en saillie avant (32Ba) est positionnée vers l'avant par rapport à une position centrale longitudinale (Lm) du couvercle latéral (32), la partie en saillie arrière (32Bb) étant positionnée vers l'arrière par rapport à la position centrale longitudinale (Lm) ; et
une largeur (M1) de la partie en saillie avant (32Ba) est supérieure à une largeur (M2) de la partie en saillie arrière (32Bb).

10. Véhicule à califourchon (1) selon l'une quelconque des revendications 1 à 8, dans lequel :
la partie en saillie (32B) comprend une partie en saillie arrière en forme de bande (32Bb) positionnée vers l'arrière par rapport à une position centrale longitudinale (Lm) du couvercle latéral (32) ; et
la partie en saillie arrière (32Bb) est inclinée latéralement davantage vers l'intérieur en direction de la partie évidée (32A) par rapport à un plan vertical.

11. Véhicule à califourchon (1) selon l'une quelconque des revendications 1 à 10, dans lequel une dimension en saillie (G1) d'une partie d'extrémité avant (32Bc) de la partie en saillie (32B) est supérieure à une dimension en saillie (G2) d'une partie d'extrémité arrière (32Bd) de la partie en saillie (32B).

12. Véhicule à califourchon (1) selon l'une quelconque des revendications 1 à 11, comprenant en outre un repose-pieds (13) disposé, vu dans une vue latérale du véhicule, vers l'arrière par rapport à une extrémité avant (9f) de l'unité de puissance (9), vers l'avant par rapport à une extrémité arrière (2b) du siège (2) et vers le bas par rapport au cadre principal (41) et au cadre arrière (42).

13. Véhicule à califourchon (1) selon l'une quelconque des revendications 1 à 12, comprenant en outre un réservoir de carburant (28), dont au moins une partie est disposée de sorte à chevaucher le siège (2), vu dans une vue en plan du véhicule.

14. Véhicule à califourchon (1) selon la revendication, 13 dans lequel une partie du réservoir de carburant (28) chevauche le cadre arrière (42), vue dans une vue latérale du véhicule.

15. Véhicule à califourchon (1) selon l'une quelconque des revendications 1 à 14, comprenant en outre :
un mécanisme de charnière (33) comprenant un arbre pivotant (33A) supportant de manière pivotante le ou chaque couvercle latéral (32) sur le coffret de stockage (30) et reliant le couvercle latéral (32) et le coffret de stockage (30) l'un à l'autre ; dans lequel
l'arbre pivotant (33A) est disposé de sorte à s'étendre vers l'arrière et de manière oblique vers le bas.
